Europäisches Patentamt

(19) European Patent Office

Office européen des brevets

(11) Publication number: **0 223 999**
**B1**

(12) **EUROPEAN PATENT SPECIFICATION**

(45) Date of publication of patent specification: **11.10.89**

(21) Application number: **86114135.6**

(22) Date of filing: **13.10.86**

(51) Int. Cl.⁴: **B 65 H 29/04, B 65 G 17/38**

(54) **Conveyor assembly.**

(30) Priority: **23.10.85 US 790431**
**19.11.85 US 799402**

(43) Date of publication of application:
**03.06.87 Bulletin 87/23**

(45) Publication of the grant of the patent:
**11.10.89 Bulletin 89/41**

(84) Designated Contracting States:
**CH DE FR GB LI**

(56) References cited:
**CH-A- 596 061**
**DE-A-2 519 561**
**DE-B-1 206 228**
**DE-B-1 289 781**
**DE-C- 50 162**
**US-A-1 861 642**
**US-A-4 294 345**
**US-A-4 381 056**

(73) Proprietor: **AM INTERNATIONAL**
**INCORPORATED**
**333 West Wacker Drive Suite 900**
**Chicago Illinois 60606-1265 (US)**

(72) Inventor: **Winiasz, Michael E.**
**4009 Washington Avenue**
**Lorain Ohio 44052 (US)**

(74) Representative: **Rottmann, Maximilian R.**
**c/o Rottmann, Zimmermann + Partner AG**
**Glattalstrasse 37**
**CH-8052 Zürich (CH)**

## Description

The present invention relates to a gripper conveyor assembly according to the preamble of claim 1.

A conveyor assembly for transporting articles, such as sheet material, from one location to another is disclosed in U.S. Patent No. 4,294,345. The conveyor assembly disclosed in this patent includes a conveyor chain to which grippers are connected. The conveyor chain includes a plurality of links which are connected at swivel joints. The conveyor chain links are provided with wheels which guide movement of the conveyor chain along a track. The links are interconnected in such a manner as to require extensive disassembly in order to replace one of the links.

A known gripper assembly for gripping sheet material articles, such as a newspaper, is disclosed in U.S. Patent No. 4,381,056. The gripper assembly disclosed in this patent has a movable clamp member which is held in clamping engagement with an article by a pawl arrangement. The pawl arrangement includes a wheel which is connected to the movable clamp member. After the wheel has been rotated to a predetermined position, a pawl engages a gap in the wheel to hold the gripper in clamping engagement with the article. In order to enable the pawl to engage the gap, the wheel must be rotated to the same position each time an article is to be gripped.

The gripper assembly disclosed in U.S. Patent No. 4,381,056 may be used to grip newpapers. Newspapers may have outer sections formed of a relatively rough paper which is easy to grip and an inner section formed of a relatively smooth paper. Due to a relatively low coefficient of friction of the smooth paper surface of the inner section, the inner section may tend to slip out of the outer section while the newspaper is held by the gripper assembly.

It is an object of the present invention to provide a new and improved conveyor assembly having gripper assemblies connected with a conveyor chain whose links can be readily removed to facilitate replacement of a defective link or gripper.

According to the invention, the gripper conveyor assembly is defined by the characteristics of claim 1. Preferred embodiments are defined in dependent claims 2—11.

Each of the gripper assemblies has a releasable clutch which prevents rotation of a movable clamp member, relative to a stationary clamp member, from any one of a plurality of closed positions to a fully open position. The clutch is operated from an engaged condition to a release condition by an actuator assembly. When the clutch is in the release condition, the movable clamp member is rotatable from any one of the plurality of closed positions back toward the fully open position.

The clutch includes a coil spring which allows the movable clamp member to rotate in a direction away from the fully open position to any one of a plurality of closed positions. When the movable clamp member has been rotated to a closed position, turns of the coil spring grip a surface connected with the movable clamp member to hold it against movement back toward the fully open position. When an engaged article is to be released, the actuator assembly applies a force to the spring to release the movable clamp member.

The movable and stationary clamp members both have resiliently deflectable gripper sections which flare outwardly from rigid base sections. To enable the gripper assembly to securely grip an article, such as a newspaper, clamping forces are concentrated at corner portions of the resilient gripper sections. This enables the gripper assembly to securely grip an article with a relatively large force at spaced apart locations on the article.

The links of the conveyor chain are interconnected by plug and socket type universal joints. In order to remove a link from the conveyor chain, the link to be removed from the chain is merely rotated at an opening in the track. This enables universal joints at opposite ends of the rotated link to be released from the adjacent links. The link can then be removed from the conveyor chain and replaced with another link. The other links in the conveyor chain remain interconnected and enclosed by a track which prevents their rotation.

Further features of the present invention will become apparent to those skilled in the art to which the present invention relates from a reading of the following specification made with reference to the accompanying drawings, in which:

Fig. 1 is a perspective view of a gripper assembly of the present invention mounted on a conveyor chain link of the present invention;

Fig. 2 is a side view, partly in section on a reduced scale, of a portion of a conveyor chain enclosed by a track;

Fig. 3 is a perspective view of the gripper assembly of Fig. 1;

Fig. 4 is an enlarged top view of the gripper assembly of Fig. 3;

Fig. 5 is a side elevational view, taken generally along the line 5—5 of Fig. 4;

Fig. 6 is a side elevational view, similar to Fig. 5, illustrating clamp members in a different position;

Fig. 7 is a sectional view, taken generally along the line 7—7 of Fig. 4, illustrating the clamp members, a clutch assembly, and a clutch actuator assembly;

Fig. 8 is a view, partly in section taken generally along the line 8—8 of Fig. 7, illustrating the clutch actuator assembly;

Fig. 9 is a view, partly in section taken generally along the line 9—9 of Fig. 7, of the clutch assembly;

Fig. 10 is a schematic illustration of a clutch spring and surfaces connected with the clamp members;

Fig. 11 is an enlarged elevational view of one of the conveyor chain links of Fig. 2;

Fig. 12 is a front elevational view of the conveyor chain link of Fig. 11, illustrating an open end of a conveyor chain link socket;

Fig. 13 is an enlarged cross sectional view, taken generally along the line 13—13 of Fig. 12;

Fig. 14 is an end view, taken generally along the line 14—14 of Fig. 13;

Fig. 15 is a rear elevational view of the conveyor chain link of Fig. 11, illustrating a conveyor chain link plug;

Fig. 16 is a view, partly in section taken generally along the line 16—16 of Fig. 11;

Fig. 17 is a bottom plan view illustrating the conveyor chain and an opening in the track;

Fig. 18 is a bottom plan view, generally similar to Fig. 17, illustrating a conveyor chain link rotated about a central axis of the track; and

Fig. 19 is an elevational view, taken generally along the line 19—19 of Fig. 18, further illustrating the link rotated.

Description of one specific preferred embodiment of the invention
Conveyor assembly

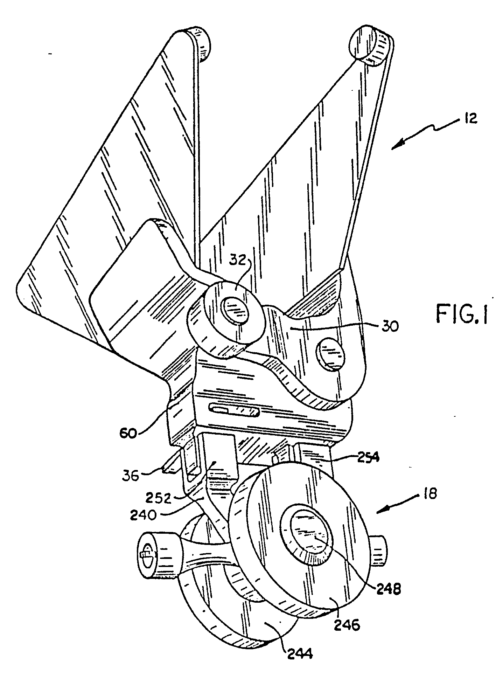

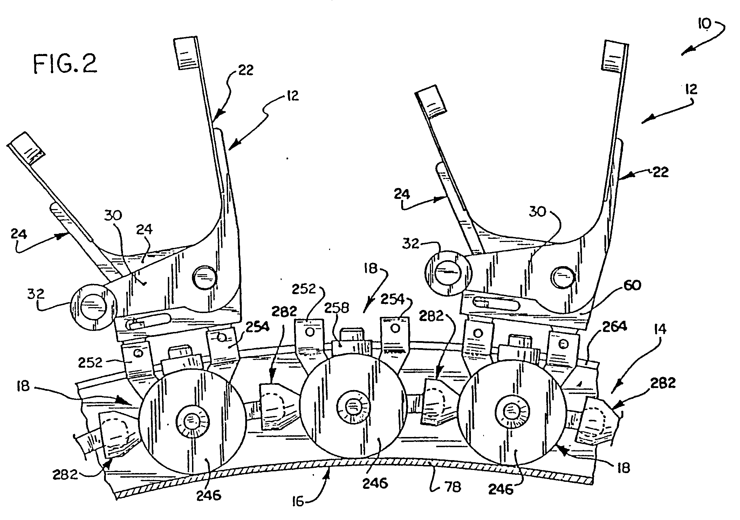

A conveyor assembly 10 constructed in accordance with the present invention is illustrated in Fig. 2. The conveyor assembly 10 includes a plurality of conveyor chain links 18 forming a conveyor chain 14. A plurality of gripper assemblies 12, as illustrated in Fig. 1, are connected with alternate links 18. The conveyor chain 14 is movable along a track 16 which extends from a pickup station (not shown) to a delivery station (not shown) and then back to the pickup station. Although only three links 18 of the conveyor chain 14 and two gripper assemblies 12 are illustrated in Fig. 2, it should be understood that a relatively large number of identical links 18 are interconnected to form the continuous conveyor chain.

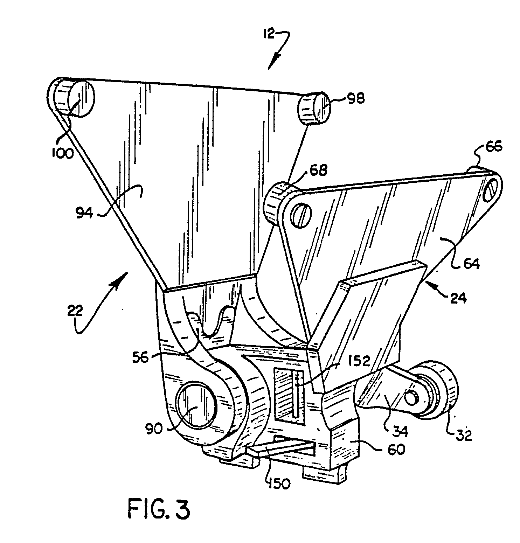

Gripper assemblies 12 (Figs. 1 and 2) are connected to every other link 18 and are used to grip articles to be transported between the pickup and receiving stations. The gripper assemblies 12 are illustrated in Figs. 3, 5 and 6 as opening upwardly. This orientation enables articles, such as newspapers, to be sequentially dropped downwardly into the open gripper assemblies 12. After the conveyor chain 14 has moved around one or more curves in the track 16, the gripper assemblies 12 face downwardly. The downwardly facing gripper assemblies 12 are sequentially opened at the delivery station to drop the articles transported from the pickup station.

Since the links 18 and the gripper assemblies 12 are of identical construction, if a gripper assembly should, for some unforeseen reason, become defective, it is merely necessary to remove the defective gripper assembly and its associated link from the conveyor chain 14 and replace it with a properly functioning gripper assembly and link.

Since the identical links 18 are releasably interconnected with the gripper assemblies 12, it is necessary to maintain only a relatively small inventory of replacement links 18 and gripper assemblies 12. Of course, if a link 18 which is not connected with a gripper assembly 12 becomes defective, the defective link can be replaced by another link which is not connected with a gripper assembly.

Gripper assembly

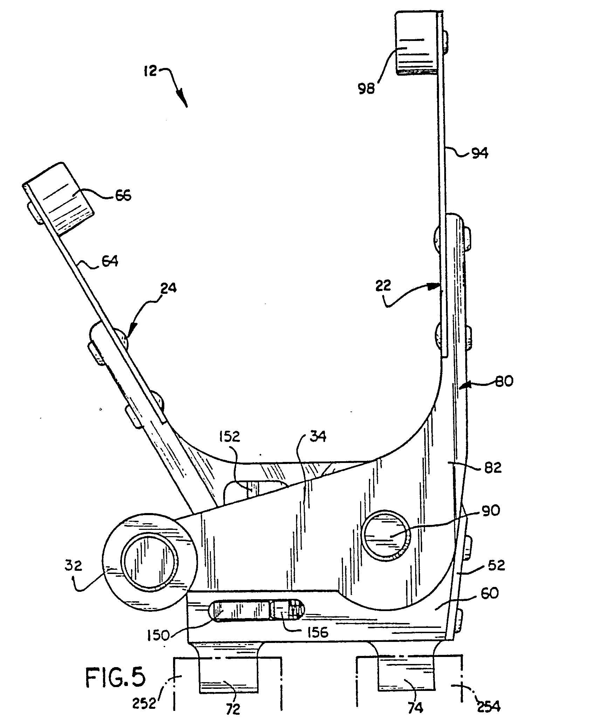

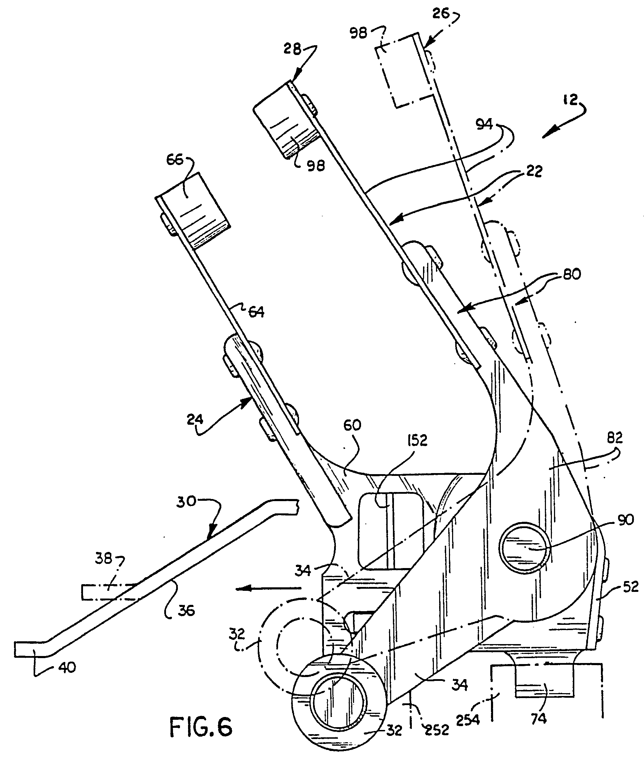

The gripper assembly 12 (Fig. 3) includes a movable clamp member 22 which is rotatable relative to a stationary clamp member 24 to clampingly grip articles of different sizes between the clamp members. In order to firmly grip articles of different sizes, the movable clamp member 22 is rotatable from a fully open position, illustrated in Fig. 5, to any one of a plurality of closed positions. Thus, the movable clamp member 22 is rotatable from the fully open position through a series of closed positions, including the closed position illustrated at 26 in dashed lines in Fig. 6, and the closed position illustrated at 28 in solid lines.

Rotation of the movable clamp member 22 toward the stationary clamp member 24 can be continued until the movable clamp member 22 abuttingly engages the stationary clamp member 24. It should be understood that although only two closed positions have been illustrated in Fig. 6, the movable clamp member 22 could be stopped in any closed position between the fully open position of Fig. 5 and a position in which the movable clamp member engages the stationy clamp member 24.

The extent of rotation of the movable clamp member 22 from the fully open position of Fig. 5 to a closed position is determined as a function of article size by an adjustable cam 30 (Fig. 6). The gripper assembly 12 is moved toward the stationary cam 30 by the conveyor chain 14 (Fig. 2).

As the gripper assembly 12 is moved toward the cam 30 with the gripper assembly in the fully open position, a roller 32 on an outwardly projecting arm 34 moves into engagement with a stationary side surface 36 on the cam 30 (Fig. 6). Continued movement of the gripper assembly 12 toward the cam 30 forces the roller 32 downwardly, as viewed in Figs. 5 and 6, to rotate the movable clamp member 22 in a counterclockwise direction from the fully open position. The extent of rotation of the clamp member 22 depends upon the location of the cam 30. Thus, if the cam 30 is raised to the position shown in dashed lines at 38 in Fig. 6, the roller 32 is moved downwardly to the dashed line position illustrated in Fig. 6. This moves the clamp member 22 to the closed position illustrated in dashed lines in Fig. 6.

If the gripper assembly 12 is to clamp a relatively thin article, the movable clamp member 22 is rotated counterclockwise closer to the stationary clamp member 24. To accomplish this, the cam 30 is moved downwardly to the position illustrated in solid lines in Fig. 6. Leftward (as viewed in Fig. 6) movement of the gripper assembly 12 along the conveyor path then results in the arm 34 being rotated downwardly to the solid line position illustrated in Fig. 6. As this occurs, the movable clamp member 22 rotates from the fully open position of Fig. 5 to the closed position illustrated in solid lines in Fig. 6.

The position of the cam 30 can be adjusted both vertically and horizontally, as viewed in Fig. 6, relative to the conveyor chain 14. Vertical adjustment of the cam 30 changes the closed position to which the movable clamp member 22 is rotated from the fully open position. Horizontal adjustment of the cam 30 changes the position at which the gripper assembly 12 is closed along its path of travel. Although the gripper assembly 12 has been described as being moved relative to a stationary cam 30 by a conveyor chain 14, it is contemplated that the gripper assembly could be connected with other devices and/or the cam moved relative to the gripper assembly.

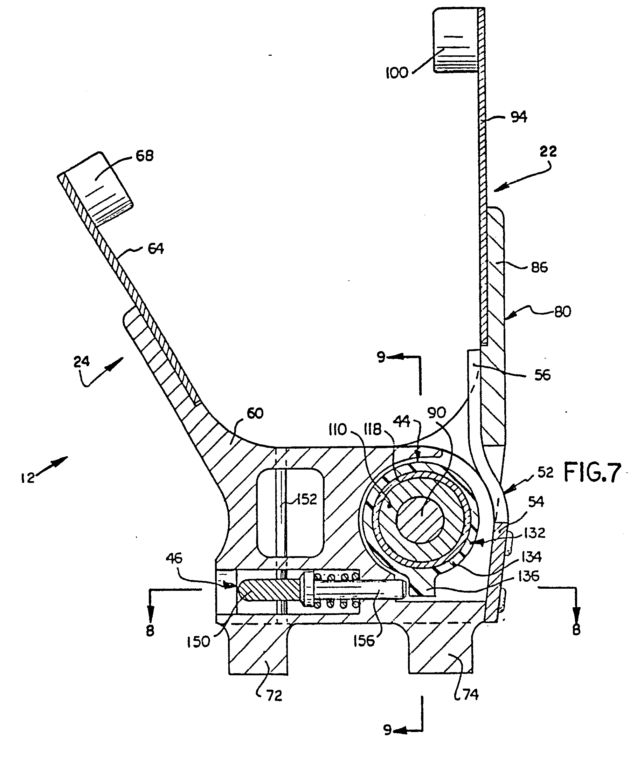

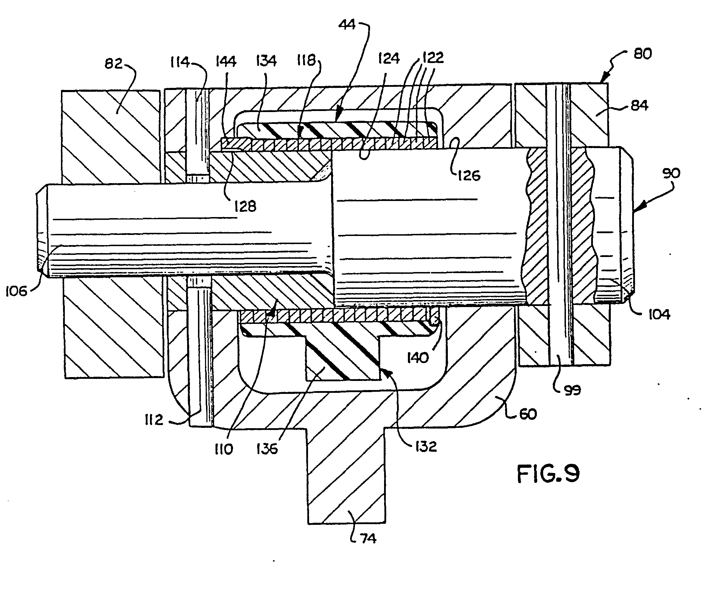

A clutch or retainer assembly 44 (Figs. 7 and 9) is operable to hold the movable clamp member 22 in any one of the numerous closed positions between the fully open position of Fig. 5 and a fully closed position in which the movable clamp member engages the stationary clamp member 24. Since the clutch assembly 44 is operable to hold the movable clamp member 22 in any one of a plurality of closed positions, the gripper assembly 12 can be used to clampingly grip articles of different sizes. To securely grip an article of a selected size, it is merely necessary to adjust the cam 30 to move the clamp member 22 to the desired closed position.

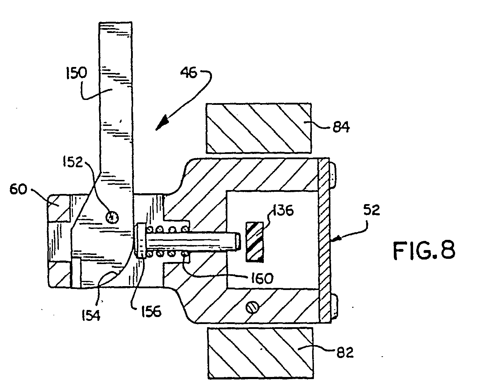

The clutch assembly 44 is operable between an engaged condition and a release condition of an actuator assembly 46 (Figs. 7 and 8). When the clutch assembly 44 is in the engaged condition, the clutch assembly prevents rotation of the movable clamp member 22 from any one of the closed positions back toward the fully open position of Fig. 5. At a selected location along the path of movement of the gripper assembly 12 and conveyor chain 14, an outwardly projecting actuator lever 150 (Figs. 7 and 8) engages a stationary abutment (not shown) and is pivoted to operate the clutch 44 to a release condition. This releases the movable clamp member 22 for rotation from any one of the closed positions back to the fully open position of Fig. 5.

When the clutch assembly 44 is released, the movable clamp member 22 is rotated to the fully open position by a biasing spring 52 (Fig. 7). The biasing spring 52 is of the leaf type and is formed from a flat piece of spring steel. A base 54 of the biasing spring 52 is fixedly connected with the stationary clamp member 24 while an upwardly (as viewed in Fig. 7) projecting end portion 56 of the biasing spring presses against the movable clamp member 22 to urge it toward the fully open position.

The stationary clamp member 24 includes a one-piece cast metal base 60 (Fig. 7) which forms the base for the gripper assembly 12. A resilient gripper section 64 is connected to the rigid base 60 and flares upwardly (as viewed in Fig. 3) and outwardly from the base 60. The gripper section 64 is formed of flat spring steel and is resiliently deflectable to apply a clamping force against one side of an article when the gripper assembly 12 is in any one of its closed positions engaging an article.

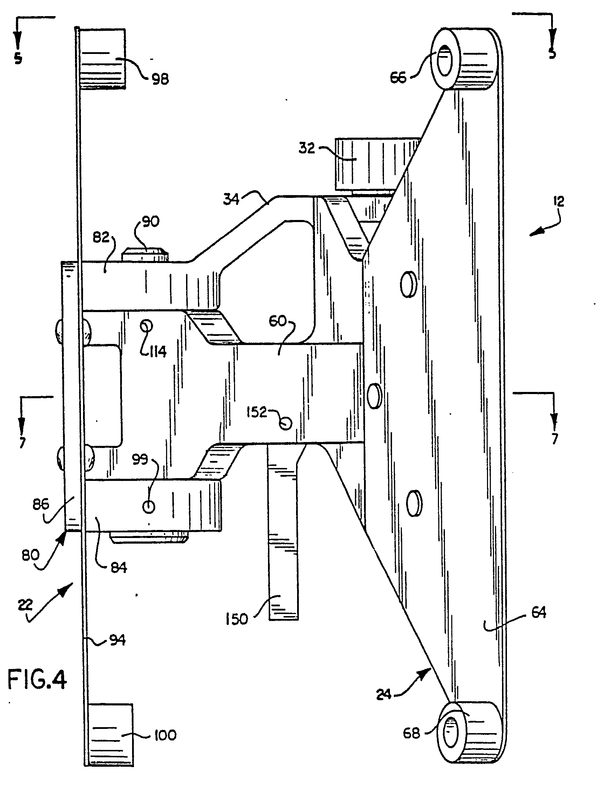

Although the gripper assembly 12 could be used to grip many different types of articles, the gripper assembly is particularly well adapted to grip newspapers. A newspaper may have an inner section which is formed of a relatively smooth paper having a surface with a relatively low coefficient of friction. In order to hold the inner section of the newspaper against movement relative to an outer section of the newspaper, the gripping force applied to the newspaper is concentrated by gripper pads 66 and 68 (Fig. 4) connected with the upper (as viewed in Figs. 4 and 5) corner portions of the gripper section 64. The gripper pads 66 and 68 are located at corner portions of the outwardly flaring gripper section 64 to enable the concentrated clamp forces applied against a newspaper at widely spaced apart locations to hold a newspaper against pivotal movement relative to the gripper assembly 12.

The rigid base portion 60 of the stationary clamp member 24 forms a housing for the clutch assembly 44 and actuator assembly 46. The base section 68 of the stationary clamp member 24 forms a base for the entire gripper assembly 12 and is provided with a pair of downwardly (as viewed in Fig. 7) projecting mounting sections 72 and 74 which are connectable with the conveyor chain 14 or other device. The lower end portion 54 of the leaf spring 52 is connected with the base section 60 of the stationary clamp member 24 and cooperates with the base section 60 to almost completely enclose the clutch assembly 44 to protect the clutch assembly from foreign material.

The movable clamp member 22 includes a one-piece cast metal base 80 which is rotatably connected with the base 60 of the stationary clamp member 24. The rigid base 80 has a pair of mounting sections 82 and 84 (Fig. 4) which are disposed on opposite sides of the base 60 of the stationary clamp member 24. The mounting sections 82 and 84 are interconnected by a connector section 86.

The gripper actuator arm 34 extends outwardly from the mounting section 82 (Figs. 5 and 6) and is cast as one piece with the base 80. A shaft 90 extends through the base section 60 of the stationary clamp member 24 and the mounting sections 82 and 84 of the base section 80 of the movable clamp member 22 to support the movable clamp member for rotation relative to the stationary clamp member.

A resiliently deflectable gripper section 94 flares upwardly (as viewed in Fig. 3) and outwardly from the base 80. The gripper section 94 is formed of flat spring steel and is resiliently deflectable to apply a clamping force against a side of an article. Thus, when the gripper assembly 12 is in any one of its closed positions, an article is clampingly gripped between the two gripper sections 64 and 94. The gripper sections 64 and 94 are resiliently deflectable to maintain a substantially constant clamping force against opposite sides of an article during movement of the gripper assembly 12 along the conveyor path.

A pair of gripper pads 99 and 100 are disposed on the upper corner portions of the gripper section 94 (Figs. 3 and 4). The gripper pad 98 and 100 cooperate with the gripper pads 66 and 68 to apply concentrated clamping forces against relatively small areas on opposite sides of a gripped article. The gripper pads 98 and 100 are widely spaced apart, as are the gripper pads 66 and 68, so that the concentrated clamping forces are applied against the opposite sides of the article by the gripper pads at widely spaced apart locations. This results in the article being held against pivotal movement relative to the gripper assembly 12.

When the gripper assembly 12 is in a closed condition, both of the gripper springs 64 and 94 are resiliently deflected. This results in resilient clamping forces being applied against opposite sides of the article. Since the clamping forces are concentrated at the gripper pads 66, 68, 98 and 100, the gripper assembly 12 can obtain a firm grip on an article and securely hold it during movement of the gripper assembly along the conveyor path.

When the clutch assembly 44 is in an engaged condition, the clutch assembly allows the movable clamp member 22 to rotate toward the stationary clamp member 24. The engaged clutch assembly 44, however, prevents rotation of the movable clamp member 22 in a direction away from the stationary clamp member 24. Therefore, the clutch assembly 44 holds the movable clamp member 22 in any position to which the movable clamp member is rotated by engagement with the cam 30. Upon actuation of the clutch assembly 44 to the release condition, the movable clamp member 22 is rotated away from the stationary clamp member 24 by the biasing spring 52. This movement returns the movable clamp member 22 to the fully open position illustrated in Figs. 4 and 5.

The clutch assembly 44 (Fig. 7) is operable to connect the base section 80 of the movable clamp member 22 with the base section 60 of the stationary clamp member 24. The shaft 90 has a cylindrical base section 104 (Fig. 9) which is fixedly connected with the base 80 of the movable clamp member 22 by a pin 99. A cylindrical hub 110 is disposed on a cylindrical mounting section 106 of the shaft 90. The hub 110 is fixedly connected with the base 60 of the stationary clamp member 24 by pins 112 and 114. Thus, upon rotation of the movable clamp member 22, the shaft 90 rotates with the movable clamp member relative to the stationary hub 110 and stationary clamp member 24.

A helical coil spring 118 provides a positive one-way clutching action between the movable clamp member 22 and the stationary clamp member 24. The clutch spring 118 prevents rotation of the movable clamp member 22 from any one of a large number of closed positions back toward a fully open position until the actuator assembly 46 is operated. Since the clutch spring 118 is effective to prevent rotation of the movable clamp member 22 back toward the open position from any closed position, the movable clamp member 22 can be moved to a closed position to engage articles of many different sizes by merely adjusting the position of the cam 30.

The spring 118 has a plurality of turns 122 (Fig. 9) which have a generally rectangular cross sectional configuration. The helical spring turns 122 are disposed in abutting engagement to define a cylindrical inner side surface 124 of the coil spring 118. The cylindrical inner side surface 124 of the coil spring 118 is disposed in firm abutting engagement with a cylindrical outer side surface 126 on the base section 104 of the shaft 90 and with a cylindrical outer side surface 128 on the hub 110. The cylindrical outer side surfaces 126 and 128 on the shaft 90 and hub 110 have the same diameter and are disposed in a coaxial relationship.

The inner side surface 124 of the coil spring 118 has a relaxed or free diameter which is slightly smaller than the diameter of the outer side surface 126 of the shaft 90 and the outer side surface 128 of the hub 110. This results in an interference fit or slight expansion of the turns 122 of the coil spring 118 when the spring is telescoped over the hub 110 and base section 104 of the shaft 90. The initial expansion of the turns of the coil spring 118 eliminates any backlash in the clutch assembly 44.

Since the clutch assembly 44 is free of backlash, once the movable clamp member 22 has been moved away from the fully open position of Fig. 5 to any one of the closed positions by the cam 30 (Fig. 6), the movable clamp member 22 does not rotate back toward the fully open position. This results in the clamp members 22 and 24 maintaining a firm grip on an article after the gripper assembly 12 moves out of engagement with the cam 30. If there was even a slight backlash in the clutch assembly 44, the force applied against a gripped article would be reduced with a resulting tendency for the article to slip out of the gripper assembly 12.

A collar 132 (Figs. 7 and 9) circumscribes the coil spring 118. The collar 132 has a cylindrical body portion 134 which engages the outer side surface on the turns 122 of the coil spring. A downwardly extending arm or tang 136 on the collar 132 is engageable by the actuator assembly 46 (Fig. 7) to operate the clutch assembly 44 from the engaged condition to the release condition.

An end 140 (Fig. 9) of the coil spring 118 extends into a notch formed in the collar 132. An opposite end 144 of the coil spring 118 extends into a notch formed in the base 60. Thus, one axial end portion 140 of the spring 118 is connected with the collar 132 while the opposite axial end 144 of the spring is connected with the base 60 of the stationary clamp member 24. The spring 118 is connected with the movable clamp member 22 only by frictional engagement between the inner side surface 124 of the spring 118 with the outer side surface 126 of the shaft 90.

During rotation of the movable clamp member 22 from the fully open position, friction forces are applied to the turns 122 of the coil spring 118 by the outer side surface 126 of the shaft 90. The helical turns 122 of the coil spring 118 are wrapped in such a manner that frictional forces applied to the inner side surface 124 of the coil spring by the outer side surface 126 of the shaft 90 tend to expand the turns of the coil spring to increase the diameter of the coil spring. Therefore, the only gripping action between the turns 122 of the coil spring 118 and the shaft 90 during rotation of the movable clamp member 22 away from the fully open position is a sliding friction force between the inner side surface 124 of the coil spring 118 and the coaxial outer side surface 126 of the shaft 90.

When rotation of the movable clamp member 22 away from the fully open position is stopped, the force of the biasing spring 52 and reaction forces due to the clamping of an article urge the clamp member 22 to rotate back toward the fully open position. The turns 122 of the coil spring 118 are wrapped so that any tendency for the movable clamp member 22 to rotate back toward the fully open position results in firm gripping forces between the coil spring 118 and both the shaft 90 and hub 110. Since the hub 110 is fixedly connected with the base 60 of the stationary clamp member 24, the coil spring 118 holds the movable clamp member 22 against any movement back toward the fully open position.

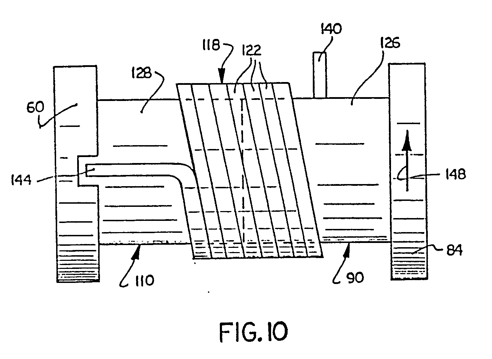

The direction in which the turns 122 of the coil spring 118 are wrapped relative to the coaxial hub 110 and shaft 90 is illustrated schematically in Fig. 10. When the shaft 90 is being rotated in the direction of the arrow 148, that is in a direction opposite to the direction in which the turns 122 of the spring 118 are wrapped, the frictional forces between the outer side surface 126 of the shaft 90 and the inner side surface 124 of the coil spring 118 tend to flex the turns of the coil spring in a direction to increase the diameter of the turns of the coil spring. The direction indicated by the arrow 148 (Fig. 10) corresponds to the direction in which the shaft 90 is rotated during closing movement of the clamp member 22. Therefore, the turns 122 of the coil spring 118 do not grip the shaft 90 as the movable clamp member 22 moves toward the stationary clamp member 24.

When the direction of rotation of the shaft 90 is opposite from that indicated by the arrow 148, the direction of rotation of the shaft 90 is in the same direction as in which the turns 122 of the coil spring 118 are wrapped. At this time the friction force between the shaft 90 and the turns 122 of the coil spring 118 tend to expand the turns in a direction to decrease the diameter of the coil spring. This results in a firm gripping action between the coil spring 118 and both the outer side surface 126 of the rotatable shaft 90 and the outer side surface 128 of the stationary hub 110. Therefore, the spring 118 firmly interconnects the shaft 90 and the hub 110 to hold them against rotation relative to each other in a direction opening the gripper assembly 12.

The actuator assembly 46 (Fig. 7) operates the clutch assembly 44 from an engaged condition in which the spring 118 firmly grips both the shaft 90 and hub 110 to a release condition in which the shaft is rotatable relative to the hub. To accomplish this, the actuator assembly 46 applies a force against the downwardly (as viewed in Figs. 7 and 9) extending shoulder 136 on the collar 132. The force applied against the shoulder 136 rotates the collar 132 in a dierction tending to increase the diameter of the coil spring 118, that is in a direction opposite to the direction in which the turns 122 of the coil spring are wrapped. This results in the turns 122 of the coil spring 118 being expanded slightly to release their grip on the base end portion 104 (Fig. 9) of the shaft 90 and on the hub 110. Once this is accomplished, the biasing spring 52 can rotate the clamp member 22 back to its fully open position.

The actuator assembly 46 includes a lever 150 (Fig. 8) which is pivotally supported on the base section 60 of the stationary clamp member 24 by a pin 152. Upon engagement of the lever 150 with a stationary abutment (not shown) to effect an opening of the gripper assembly 12, the lever is rotated in a counterclockwise direction (as viewed in Fig. 8). This causes a cam surface 154 on the lever 150 to press a pin 156 against the downwardly extending shoulder 136 on the collar 132. As the shoulder 136 is rotated in a counterclockwise dierction (as viewed in Fig. 7) by the pin 156, the clutch assembly 44 is released.

After the actuator lever 150 has moved out of engagement with the stationary abutment, a biasing spring 160 moves the pin 156 out of engagement with shoulder 136 on the collar 132. This enables the natural resilience of the spring 118 to return the clutch assembly 44 to its release condition. The position of the abutment which moves the actuator lever 150 may be changed relative to the conveyor chain 14 to enable the position at which the gripper assembly 12 is opened to be changed.

When the gripper assembly 12 is to engage an article, a conveyor chain 14 moves the gripper assembly along a path to a pickup station with the gripper assembly in the fully open position of Fig. 5. As the gripper assembly 12 approaches the position in which it is to grip an article, the roller 32 on the actuator arm 34 moves into engagement with the cam 30. Continued movement of the gripper assembly 12 along the path causes the cam 30 to rotate the movable clamp member 22 in a counterclockwise direction (as viewed in Fig. 5) from a fully open position to any one of a plurality of closed positions, such the closed positions 26 or 28 of Fig. 6.

As the movable clamp member 22 moves toward a closed position, the shaft 90 rotates relative to the coil spring 118 and to the hub 110 (Fig. 9). As this occurs, the friction force between the outer side surface 126 on the shaft 90 and the inner side surface 124 of the helical spring 118 tends to expand the spring. Therefore, the spring 118 is ineffective to grip the shaft 90 and hub 110 to hold the shaft against rotation.

When the gripper actuator arm 34 moves clear of the cam 30, the movable clamp member 22 will be in a closed position corresponding to the vertical position of the cam 30. At this time, an article will be firmly gripped between the movable and stationary clamp arms 22 and 24. The clutch assembly 44 prevents any rotation of the movable clamp member 22 back toward the fully open position. The conveyor assembly 10 is then operated to move the gripper assembly 12 to a delivery station where the article is released.

As the gripper assembly 12 moves toward the receiving station, a firm grip is maintianed on the article. The pads 66, 67, 98 and 100 apply concentrated clamping forces against relatively small areas on opposite sides of the gripped article. Since the clamping forces are applied against widely spaced areas on each side of the gripped article, the article cannot work loose as it is being transported.

At the receiving station, the actuator lever 150 moves into engagement with a stationary stop or abutment member. Engagement of the actuator lever 150 with the stationary abutment member causes the actuator lever to rotate in a counterclockwise direction (as viewed in Fig. 7). This results in the pin 156 being pressed against the shoulder 136 on the collar 132 to apply a force to the coil spring tending to open or increase the diameter of the turns 122 of the coil spring. As this occurs, the grip of the coil spring 118 on the shaft 90 and collar 110 is released to enable the biasing spring 54 (Fig. 7) to rotate the movable clamp member 22 from a selected closed or gripping position back to its fully open position. As the gripper assembly 12 opens, the article is released at the delivery station.

Continued operation of the conveyor 10 and movement of the gripper assembly 12 causes the actuator lever 150 to move out of engagement with the stationary abutment. As this occurs, the spring 160 presses the pin 156 against the lever 150 to pivot the lever back to the position shown in Fig. 7. This releases the collar 132 so that the clutch spring 118 returns to its engaged condition.

Conveyor chain links

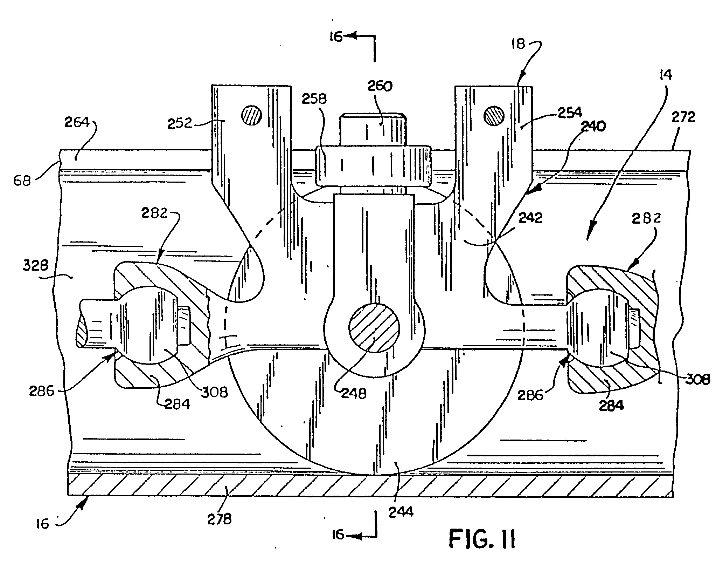

Each of the identical chain links 18 includes a one-piece cast metal body section 240 (Fig. 11) having a main or central portion 242. A pair of rollers 244 and 246 (Figs. 1 and 4) are disposed on opposite sides of the central portion 242 of the body section 240. The rollers 244 and 246 are rotatably supported on an axle 248 (Fig. 11) which extends through the link 18.

A pair of upwardly extending mounting brackets 252 and 254 are provided on the body section 240. The brackets 252 and 254 receive downwardly projecting flanges 72, 74 on the base 60 of a gripper assembly 12 (Figs. 1 and 2). The gripper assembly 12 is releasably connected with the chain link 18 by suitable pins which extend through holes formed in the brackets 252 and 254 and in the downwardly extending projections on the base section 60 of the gripper assembly 12. Other known types of fastening arrangements could be used to connect the gripper assembly 12 and conveyor chain link 18.

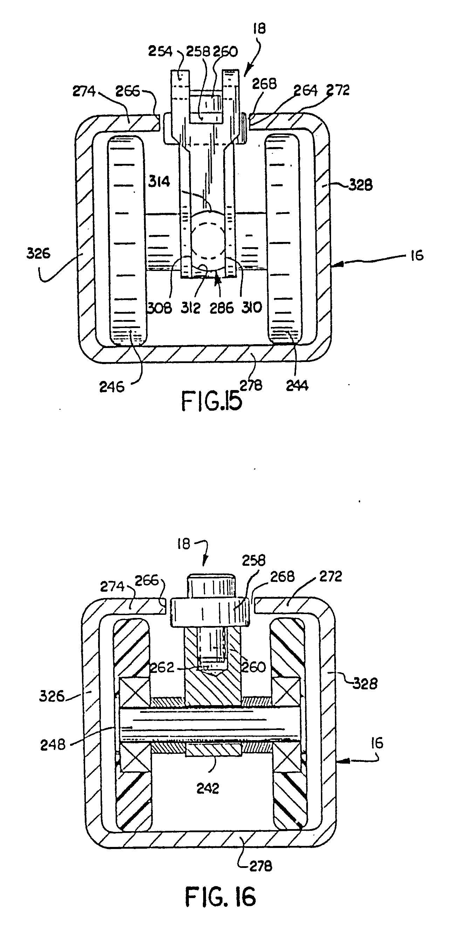

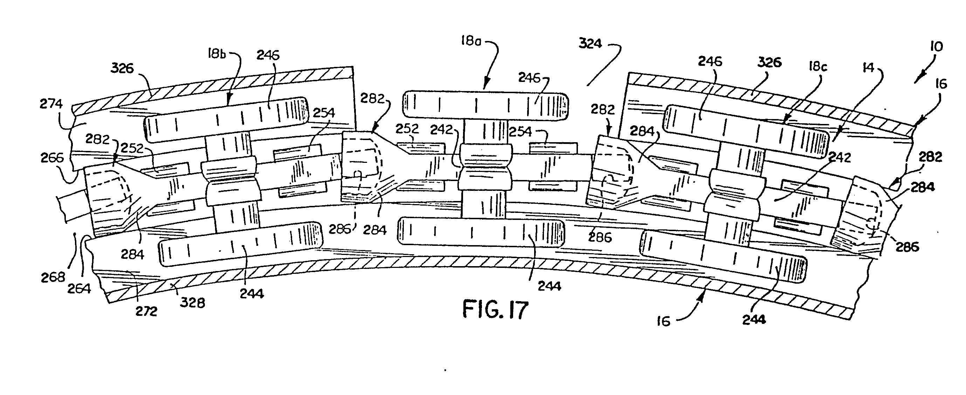

A guide roller 258 (Fig. 11) is rotatably supported on a pin 260. The pin 260 is received in a socket 262 (Fig. 16) formed in the body section 240 of the link 18. The roller 258 engages opposite side surfaces 264 and 266 of a slot 268 (Figs. 16 and 17) formed between longitudinally extending guide sections 272 and 274 of the track 16.

During movement of the chain links 18 along the track 16, the rollers 244 and 246 roll on either a main section 278 (Fig. 16) of the track or on the guide sections 272 and 274 of the track 16. When the gripper assemblies 12 are in the upwardly facing orientation shown in Fig. 2, the rollers 244 and 246 will roll along an inner side surface on the main section 278 of the track 16. However, when the gripper assemblies 12 face downwardly, the rollers 244 and 246 roll along inner side surfaces on the guide sections 272 and 274 (Fig. 16) of the track 16. Regardless of which orientation the gripper assembly 12 is in, that is either an upwardly facing or a downwardly facing orientation, the rollers 258 on the links 18 cooperate with the slot 268 to guide movement of the links along the track 16.

To enable the conveyor chain 14 to flex as it goes around curves, universal joints 282 (Fig. 2) are provided between adjacent links. The universal joints 282 are formed by sockets 284 (Fig. 11) at the leading ends of the links 18 and plugs 286 of the trailing ends of the links. The socket 284 at one end of a link 18 receives a plug 286 of an adjacent link. Similarly, the plug 286 at the opposite end of a link 18 is received in a socket 284 of an adjacent link. The sockets 284 and plugs 286 are free to swivel and tilt in any direction to provide a limited range of universal freedom of movement of one link 18 relative to an adjacent link.

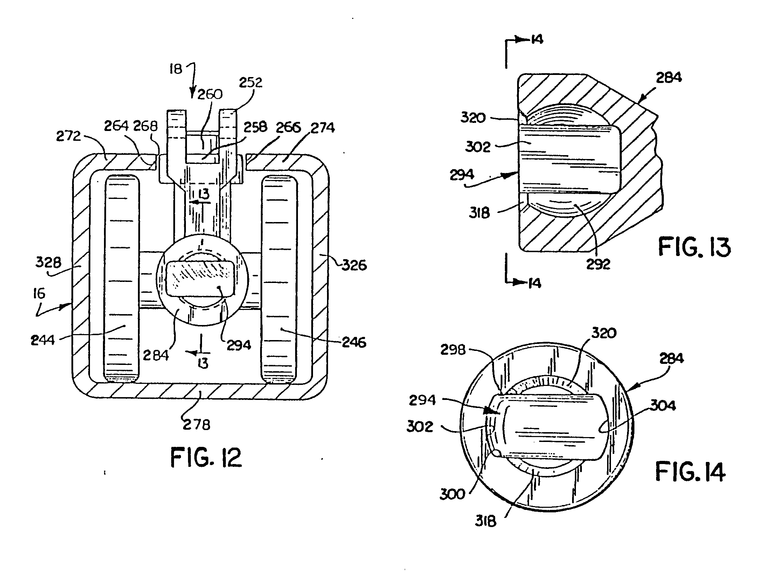

Each of the sockets 284 (Fig. 13) includes a spherical cavity 292 in which a plug 286 of an adjaacent link is received. The spherical cavity 292 has an opening 294 with a configuration slightly larger than the cross sectional configuration of a plug 286. Thus, the opening 294 has a generally rectangular configuration with flat side surfaces 298 and 300 (Fig. 14) which are interconnected by arcuate surfaces 302 and 304. Each of the plugs 286 has a pair of flat parallel side surfaces 308 and 310 (Fig. 15) which are interconnected by arcuate side surfaces 312 and 314. The arcuate side surfaces 312 and 314 form portions of a sphere having a diameter which is slightly smaller than the diameter of the spherical inner side surfaces of the socket cavity 292.

When a plug 286 is to be inserted into a socket 284 to interconnect a pair of links 18, the plug and socket are oriented relative to each other with the flat side surfaces 298 and 300 on the socket opening 294 aligned with the flat side surfaces 308 and 310 of the plug 286 (Figs. 14 and 15). Since the opening 294 is slightly larger than the plug 286, the plug can be inserted into the socket cavity 292 through the opening 294 (Figs. 13 and 14). Once this has been done, the socket and plug 284 and 286 are rotated relative to each other through 90°. This results in the spherical side surface areas 312 and 314 on the plug being disposed in engagement with the spherical side surfaces of the socket cavity 292.

Once the plug 286 has been inserted into the socket 284 and rotated, the flat side surfaces 308 and 310 on the plug will be offset by 90° from the flat side surfaces 298 and 300 of the socket opening 294. Therefore, the plug 286 is held in the socket cavity 292. The opening 294 to the socket cavity 292 flares outwardly at 318 and 320 to enable the plug 286 and socket 284 to be rotated relative to each other about their longitudinal central axes and simultaneously tilted in any direction.

To disconnect a link 18 at a universal joint 282, it is necessary to rotate the plug 286 and socket 284 relative to each other. The rotation is stopped when the flat side surfaces 308 and 310 on the plug are aligned with the flat side surfaces 298 and 300 on the socket 284. The plug 286 can then be moved axially out of the socket 284.

Replacement of a link

In accordance with a feature of the invention, any one of the numerous links 18 in the conveyor chain 14 can be readily replaced while the other links in the conveyor chain remain interconnected and enclosed by the track 16. This enables a defective link 18 or a defective link and gripper assembly 12 to be quickly and easily replaced. Thus, if a gripper assembly 12 should fail to operate in a desired manner, it is merely necessary to remove the link 18 to which the defective gripper assembly is connected from the conveyor chain 14. Similarly, if one of the links 18 which is not attached to a gripper assembly 12 becomes defective, the defective link can be readily removed from the conveyor chain 14.

To disconnect a selected link 18a (Fig. 17) and its associated gripper 12 from the conveyor chain 14, the selected link is moved along the track 16 to a position in which the link is aligned with a rectangular opening 324 in a side wall 326 of the track 16 and in the guide wall 274 of the track 16. In the embodiment of the invention illustrated in Fig. 17, the opening 324 is disposed on the outside of a curve around which the conveyor chain 14 extends. Since the opening 324 is in the outside of the curve, the side wall 326 of the track 16 is of minimal importance in guiding movement of the links 18. Thus, an inner side wall 328 of the track 16 and inner guide surface 264 of the slot 268 are primarily effective in guiding movement of the links 18 around the curve. Of course, the opening 324 could be formed in the track 16 at a location other than along a curve if desired.

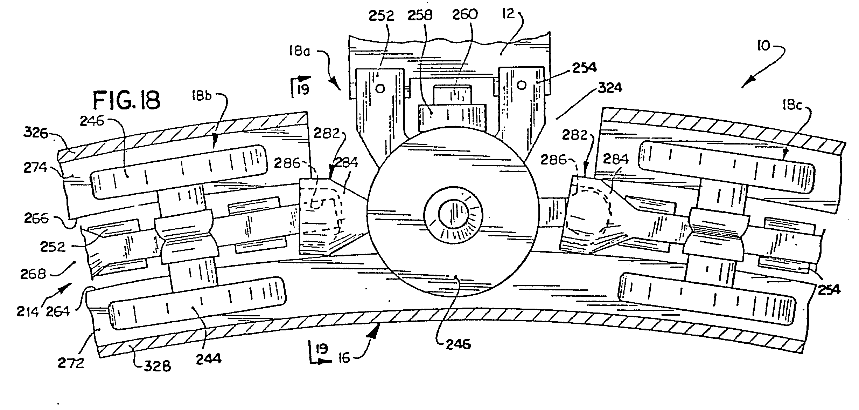

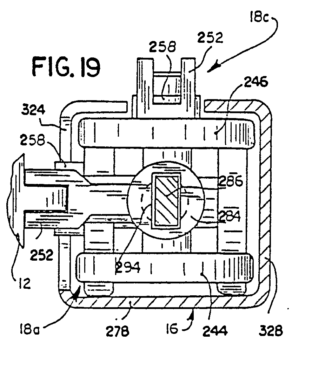

After the selected link 18a which is to be removed from the conveyor chain 14 has been aligned with the opening 324, the link is rotated through 90° about the central axis of the track 16 from the normal position of Fig. 17 to the disconnect position of Figs. 18 and 19. This moves the socket 284 on the selected link 18a relative to the plug 286 on the preceding link 18b. In addition, this rotates the plug 286 on the selected link 18a relative to the socket 284 on the succeeding link 18c. Once the selected link 18a has been rotated through 90° relative to the adjacent links, the flat side surfaces 308, 310 on the plugs 286 connecting the selected 18a link with the adjacent links 18b and 18c are aligned with the flat side surfaces 298, 300 of the openings 294 in the sockets 284.

When the selected link 18a is in the disconnect position of Figs. 18 and 19, it can be removed from conveyor chain 14 by merely disconnecting the universal joints 282 at opposite ends of the selected link. This can be done by pulling rearwardly, that is toward the right as viewed in Fig. 18, on the selected link 18a while pushing forwardly, that is toward the left as viewed in Fig. 18, on the preceding link 18b. The clearance between the numerous links 18 and the track 16 and between components of the many universal joints 282 in the conveyor chain 14 allows the selected link 18a to move rearwardly to disengage its socket 284 from the plug 286 of the preceding link 18b. The selected link 18a is then pivoted into the opening 324 and the plug 286 of the selected link is removed from the socket 284 on the trailing link 18c. The selected link 18a, with a gripper assembly 12 attached thereto, can be completely disconnected from the conveyor chain 14 while the other links in the convyeor chain remain connected with each other are enclosed by the track 16.

A new link 18 can then be inserted into the conveyor chain 14. If the link 18 which was removed from the conveyor chain 14 was connected with a gripper assembly 12, the new link would also be connected with a gripper assembly. Of course, if the link 18 removed from the conveyor chain 14 was not connected with a gripper assembly 12, the new link would not be connected with a gripper assembly.

To install the new link 18 in the conveyor chain 14, the plug 286 at one end of the new link is inserted through the track opening 324 and into the socket 284 of the link 18c while the new link is offset by 90° from the link 18c. The socket 284 at the opposite end of the new or replacement link 18 can then receive the plug 286 of the preceding link 18b. The replacement link is then rotated through 90° relative to the track 16 and the adjacent links 18b and 18c of the conveyor chain 14. This moves the replacement link 18 from the disconnect position of Fig. 18 to the normal operating position shown in Fig. 17.

As the replacement link 18 is rotated to the normal operating position, the socket 284 on the replacement link is rotated relative to the plug 286 of the leading adjacent link 18b to interconnect the replacement link and the leading link. Similarly, the plug 286 on the replacement link 18 is rotated relative to the socket 284 on the trailing adjacent link 18c to interconnect the replacement link and the trailing link. Once this has been done, the links 18 of the conveyor chain 14 are again connected in a closed loop.

From the above description of a preferred embodiment of the invention, those skilled in the art will perceive improvements, changes and modifications. Such improvements, changes and modifications within the skill of the art are intended to be covered by the appended claims.

## Claims

1. A gripper conveyor assembly comprising a plurality of gripper means (12) for engaging articles to be conveyed from a first location to a second location, a track (16) extending from the first location to the second location, a conveyor chain (14) connected with said gripper means (12) and movable along said track, said conveyor chain being enclosed by said track and including a plurality of interconnected links (18), each one of said links including a body section (240) connected to one of said gripper means (12), roller means (246, 246) connected with said body section (240) of said one link for engaging said track (16) to guide movement of said body section (240) along said track, said track (16) including wall means (274, 276, 326, 328) for at least partially enclosing said conveyor chain (14) and for defining a slot (268) through which said one link and said one gripper means are interconnected, said slot including surface means (264, 266) for preventing axial rotation of said links during movement of said links along said track, characterized by each one of said links (18) including socket means (284) at a first end portion of said body section (24) for receiving a plug (286) of an adjacent link, and a plug (286) at a second end portion of said body section (240) for insertion into a socket means (284) of an adjacent link, said socket means including surface means for defining an opening (294) through which a plug (286) of an adjacent link can be inserted into said socket means (284) when said body section (240) of said one link and the adjacent link are in a first orientation relative to each other and for blocking withdrawal of a plug of an adjacent link from said socket means when said body section of said one link and the adjacent link are in a second orientation relative to each other, said body section (240) of said one link and said one gripper means (12) being rotatable together relative to said track between the first and second orientations, said wall means (274, 326) of said track including surface means at least partially defining an opening (324) for enabling said body section (240) of said one link (18) and said one gripper means (12) to be rotated together about the longitudinal axis of said track at the opening (324) from the second orientation to the first orientation and longitudinally disconnected from the adjacent links and laterally moved through the opening (324) while the adjacent links are enclosed by said track.

2. A gripper conveyor assembly as set forth in claim 1, characterized in that said roller means includes first (244) and second (246) rollers disposed on opposite sides of said body section (240) and rotatable about an axis extending perpendicular to the longitudinal axis of said track (16), said wall means including a wall (274, 276) in which the slot (268) is formed, said body section (240) being oriented with the axis of rotation of said roller means (244, 246) extending perpendicular to said central wall when said body section (240) is oriented with the axis of rotation of said roller means (244, 246) extending parallel to said side wall when said body section is in the first orientation.

3. A gripper conveyor assembly as set forth in claim 1, characterized in that said wall means (274, 276, 326, 328) of said track includes a central wall (274, 276) in which the slot (268) is formed and a pair of side walls (326, 328) connected with opposite sides of the central wall, said opening (324) extending from the slot (268) through at least a major portion of one of the side walls (326) to enable said body section (240) and said one gripper means (12) to be rotated together at the opening in said track to release said plug (286) and socket (284) on said body section (240) for disconnection from a socket and plug on body sections of adjacent links.

4. A gripper conveyor assembly as set forth in claim 1, characterized in that said body section (240), socket means (284) and plug (286) of said one link are cast as one piece.

5. A gripper conveyor assembly as set forth in claim 1, characterized in that said gripper means (12) includes a first clamp member (24), a first surface area (128) connected with said first clamp member, a second clamp member (22) rotatable relative to the first clamp member (24) from a fully open position to any one of a plurality of closed positions to enable articles of different sizes to be gripped between said clamp members, a second surface area (126) connected with said second clamp member (22), and releasable retainer means (44) operable between an engaged condition preventing rotation of said second clamp member (22) from any one of the plurality of closed positions to the fully open position, and a release condition in which said second clamp member (22) is rotatable from any one of the plurality of closed positions to the fully open position, said retainer means (44) including a coil spring (118) having a plurality of turns (122), said turns (122) of said coil spring (118) including inner side surface means (124) for gripping said first (128) and second (126) surface areas when said retainer means (44) is in the engaged condition to prevent rotation of said second clamp member (22) toward the fully open position, said inner side surface areas (126, 128) being rotatable relative to each other when said retainer means (44) is in the release condition to enable said second clamp member (22) to rotate toward the fully open position.

6. A gripper conveyor assembly as set forth in claim 5, characterized in that said first and second surface areas (126, 128) have a cylindrical configuration and are coaxial with the axis of rotation of said second member (22), said inner side surface means (124) of said coil spring (118) having a cylindrical configuration and being disposed in a coaxial relationship with said first and second surface areas (126, 128).

7. A gripper conveyor assembly as set forth in claim 6, characterized by including actuator means (46) for operating said retainer means (44) from the engaged condition to the release condition, said actuator means (46) including means (150, 156) for urging the turns (122) of said coil spring (118) to flex in a direction tending to increase the diameter of said inner side surface means (124) of said coil spring (118).

8. A gripper conveyor assembly as set forth in claim 5, characterized in that the turns (122) of said coil spring (118) are wrapped around said first (128) and second (126) surface areas in a direction which clamp member (22) from one of the closed positions to the fully open position.

9. A gripper conveyor assembly as set forth in claim 5, characterized in that at least one of said first (128) and second (126) surface areas applies a friction force to said inner side surface means (124) of said coil spring (118) in a direction tending to increase the size of the turns (122) of said coil spring (118) upon rotation of said second clamp member (22) from the fully open position toward one of the closed positions.

10. A gripper conveyor assembly as set forth in claim 5, characterized by including a collar (132) circumscribing said coil spring (118), a first end (140) of said coil spring (118) being connected with said collar (132) and a second end (144) of said coil spring (118) being connected with said first clamp member (24), and actuator means (46) for operating said retainer means (44) from the engaged condition to the release condition, said actuator means (46) including means (150, 156) for rotating said collar (132) relative to said first clamp member (22).

11. A gripper conveyor assembly as set forth in claim 5, characterized by including a shaft (90) connected with said second clamp member (22) for rotation therewith relative to said first clamp member (24), said shaft (90) having a first portion (104) with a relatively large cylindrical outer side surface and a second portion (106) with a relatively small outer side surface, said second surface area (126) being disposed on said first portion (104) of said shaft, a hub section (110) connected with said base (60) and circumscribing the second portion (106) of said shaft, said hub section (110) having a cylindrical outer side surface which forms said first surface area (128) and is coaxial with and of the same diameter as the cylindrical outer side surface (126) of said first portion (104) of said shaft, said inner side surface (124) of said coil spring (118) being disposed in engagement with the outer side surfaces of said hub section (110) and the first portion (104) of said shaft, an end portion (144) of said coil spring (118) being connected with said first clamp member (24), a collar (132) circumscribing at least a portion of said coil spring, another end portion (140) of said coil spring (118) being connected with said collar (132), said cylindrical outer side surface (126) of said first portion (104) of said shaft (90) being slidable relative to the inner side surface (124) of said coil spring (118) upon rotation of said second clamp member (22) from the fully open position to any one of the closed positions back to the fully open position to enable said first and second clamp members (24, 22) to maintain a secure grip on an article, and actuator means (46) for applying force to said collar (132) in a direction to increase the size of the inner side surface (124) of said coil spring (118) to release the grip of the inner side surface (124) of said coil spring (118) on the outer side surfaces (128, 126) of said hub section (110) and the first portion (104) of said shaft to allow said second clamp member (22) to rotate from one of the closed positions back to the fully open position.

## Patentansprüche

1. Fördereinrichtung mit Greifern, welche aufweist:

eine Mehrzahl von Greifern (12) zum Ergreifen von Gegenständen, welche von einem ersten zu einem zweiten Ort zu fördern sind;

eine Schiene (16), welche sich vom ersten zum zweiten Ort erstreckt;

eine Förderkette (14), welche mit den Greifern (12) verbunden und längs der Schiene bewegbar ist, wobei

die Förderkette durch die Schiene umschlossen ist und eine Mehrzahl von miteinander verbundenen Gliedern (18) aufweist, von denen jedes aufweist:

einen Rumpfteil (240), welcher mit einem der Greifer (12) verbunden ist;

Rollen (244, 246), welche mit dem Rumpfteil (240) des betreffenden Gliedes verbunden sind, um in die Schiene (16) einzugreifen und den Rumpfteil (240) längs der Schiene (16) zu führen; und wobei

die Schiene (16) Wände (274, 276, 326, 328) aufweist, welche die Förderkette (14) mindestens teilweise umschliessen und einen Schlitz (268) offenlassen, durch welchen hindurch das betreffende Glied und der betreffende Greifer miteinander verbunden sind, wobei

der Schlitz an der Oberfläche angeordnete Mittel (264, 266) aufweist, welche eine axiale Drehung der Glieder während ihrer Bewegung längs der Schiene verhindern,

dadurch gekennzeichnet, dass jedes der Glieder (18) aufweist:

eine an einem ersten Endteil des Rumpfteils (240) angeordneten Buchse (284) zur Aufnahme eines Steckers (286) eines benacharten Gliedes; und

einen an einem zweiten Endteil des Rumpfteils (240) angeordneten Stecker (286) zur Einführung in die Buchse (284) des benachbarten Gliedes, wobei

die Oberflächen der Buchse (284) so ausgebildet sind, dass sie eine öffnung (294) definieren, durch welche ein Stecker (286) eines benachbarten Gliedes in die Buchse (284) eingeführt werden kann, wenn der Rumpfteil (240) des betreffenden Gliedes und das benachbarte Glied in einer ersten Ausrichtung zueinander stehen, und welche das Herausziehen eines Steckers (286) eines benachbarten Gliedes aus der betreffenden Buchse (284) verhindert, wenn der Rumpfteil des betreffenden Gliedes und das benachbarte Glied in einer zweiten Ausrichtung zueinander stehen; und wobei

der Rumpfteil (240) des betreffenden Gliedes und der betreffende Greifer (12) miteinander relativ zur Schiene zwischen der ersten und der zweiten Ausrichtung drehbar sind; und wobei

die Wände (274, 326) der Schiene Oberflächen aufweisen, welche mindestens teilweise eine Öffnung (324) definieren, die es ermöglicht, dass der Rumpfteil (240) des betreffenden Gliedes (18) und der betreffende Greifer (12) miteinander um die Längsachse der Schiene von der zweiten in die erste Ausrichtung in der öffnung (324) gedreht, in Längsrichtung von den benachbarten Gliedern getrennt und seitlich durch die öffnung (324) bewegt wird, während die benachbarten Glieder von der Schiene umschlossen sind.

2. Fördereinrichtung mit Greifern nach Anspruch 1, dadurch gekennzeichnet, dass die Rollen (244, 246) erste (244) und zweite (246) Rollen umfassen, welche an gegenüberliegenden Seiten des Rumpteils (240) angeordnet und um eine sich lotrecht zur Längsachse der Scheine (16) erstreckende Achse drehbar sind, wobei

die Wände (274, 276, 326, 328) eine zentrale Wand (274, 276) umfassen, welche den Schlitz (268) aufweist; und wobei

der Rumpfteil (240) so orientiert ist, dass sich die Rotationsachse der Rollen (244, 246) lotrecht zu dieser zentralen Wand erstreckt, wenn der Rumpfteil (240) sich in der zweiten Ausrichtung befindet, und dass der Rumpfteil (240) so orientiert ist, dass sich die Rotationsachse der Rollen (244, 246) parallel zur Seitenwand (326, 328) erstreckt, wenn der Rumpfteil (240) sich in der ersten Ausrichtung befindet.

3. Fördereinrichtung mit Greifern nach Anspruch 1, dadurch gekennzeichnet, dass die Wände (274, 276, 326, 328) der Schiene eine zentrale Wand (274, 276), in welcher der Schlitz (268) angeordnet ist, und ein Paar Seitenwände (326, 328), welche mit gegenüberliegenden Seiten der zentralen Wand verbunden sind, umfassen, wobei

sich die öffnung (324) vom Schlitz (268) durch mindestens einen grösseren Teil einer der Seitenwände (326) erstreckt, um zu ermöglichen, dass der Rumpfteil (240) und der betreffende Greifer (12) miteinander in der öffnung der Schiene (16) sich drehen, um den Stecker (286) und die Buchse (284) am Rumpfteil (240) freizugeben und von der Buchse und dem Stecker an den Rumpfteilen benachbarter Glieder zu trennen.

4. Fördereinrichtung mit Greifern nach Anspruch 1, dadurch gekennzecihnet, dass der Rumpfteil (240), die Buchse (284) und der Stecker (286) aus einem Stück gegossen sind.

5. Fördereinrichtung mit Greifern nach Anspruch 1, dadurch gekennzeichnet, dass die Griefer (12) aufweisen:

ein erstes Klemmelement (24);

einen mit dem ersten Klemmelement (24) verbundenen ersten Oberflächenteil (128);

ein zweites Klemmelement (22), welches gegenüber dem ersten Klemmelement (24) von einer völlig geöffneten Stellung zu irgendeiner einer Mehrzahl von geschlossenen Stellungen schwenkbar ist, um zwischen den Klemmelementen (22, 24) Gegenstände verschiedener Abmessungen zu ergeifen;

einen mit dem zweiten Klemmelement (22) verbundenen zweiten Oberflächenteil (126); und

freigebbare Haltemittel (44), welche zwischen einer Eingriffsstellung, in der die Schwenkung des zweiten Klemmelementes (22) aus irgendeiner der Mehrzahl von geschlossenen Stellungen zur völlig geöffneten Stellung verhindert wird, und einer Freigabestellung, in der das zweite Klemmelement (22) von irgendeiner der Mehrzahl von geschlossenen Stellungen zur völlig geöffneten Stellung schwenkbar ist, betreibbar ist, wobei

die Hältemittel (44) eine Schraubenfeder (118) mit einer Mehrzahl von Windungen (122) umfassen, und wobei

die Windungen (122) der Schraubenfeder (118) innenseitig angeordnete Oberflächenmittel (124) aufweisen zum Ergrefien der ersten (128) und zweiten (126) Oberflächenteile, wenn die Haltemittel (44) sich in der Eingriffsstellung befinden, um die Schwenkung des zweiten Klemmelementes (22) in die völlig geöffnete Stellung zu verhindern; und wobei

die innenseitigen Oberflächenteile (126, 128) relativ zu einander schwenkbar sind, wenn die Haltemittel (44) sich in der Freigabestellung befinden, um dem zweiten Klemmelement (22) die Schwenkung in die völlig geöffnete Stellung zu ermöglichen.

6. Fördereinrichtung mit Greifern nach Anspruch 5, dadurch gekennzeichnet, dass die ersten (128) und zweiten (126) Oberflächenteile zylindrisch ausgebildet und koaxial zur Schwenkachse des zweiten Klemmelementes (22) angeordnet sind, wobei

die innenseitigen Oberflächenmittel (124) der Schraubenfeder (118) zylindrisch ausgebildet und koaxial zum ersten (128) und zum zweiten (126) Oberflächenteil angeordnet sind.

7. Fördereinrichtung mit Greifern nach Anspruch 6, dadurch gekennzeichnet, dass sie ein Betätigungselement (46) zur Betätigung der Haltemittel (44) von der Eingriffsstellung in die Freigabestellung aufweist, wobei

das Betätigungselement (46) Mittel (150, 156) aufweist, um die Schraubenfeder (118) in einer Richtung zu biegen, in welcher der Durchmesser der innenseitigen Oberflächenmittel (124) der Schraubenfeder (118) zunimmt.

8. Fördereinrichtung mit Greifern nach Anspruch 5, dadurch gekennzeichnet, dass die Windungen (122) der Schraubenfeder (118) in einer solchen Richtung um den ersten (128) und den zweiten (126) Oberflächenteil gewickelt sind, dass das zweite Klemmelement (22) von einer der geschlossenen Stellungen in die völlig geöffnete Stellung geschwenkt wird.

9. Fördereinrichtung mit Greifern nach Anspruch 5, dadurch gekennzeichnet, dass mindestens der eine der ersten (128) und der zweiten (126) Oberflächenteile Reibungskräfte auf die innenseitigen Oberflächenmittel der Schraubenfeder (118) in einer solchen Richtung ausübt, dass die Abmessung der Windungen (122) der Schraubenfeder (118) bei der Schwenkung des zweiten Klemmelementes (22) von der völlig geöffneten Stellung in eine der geschlossenen Stellungen zunimmt.

10. Fördereinrichtung mit Greifern nach Anspruch 5, dadurch gekennzeichnet, dass sie aufweist:

einen um die Schraubenfeder (118) herum angeordneten Kragen (132), wobei

ein erstes Ende (140) der Schraubenfeder (118) mit dem Kragen (132) und ein zweites Ende (144) der Schraubenfeder (118) mit dem ersten Klemmelement (24) verbunden sind; und

ein Betätigungselement (46) zur Betätigung der Haltemittel (44) von der Eingriffsstellung in die Freigabestellung, wobei

das Betätigungselement (46) Mittel (150, 156) zum Drehen des Kragens (132) relativ zum ersten Klemmelement (24) aufweist.

11. Fördereinrichtung mit Greifern nach Anspruch 5, dadurch gekennzeichnet, dass sie aufweist:

einen Schaft (90), welcher mit dem zweiten Klemmelement (22) verbunden ist, um dieses relativ zum ersten Klemmelement (24) zu schwenken, und der einen ersten Teil (104) mit einer relativ grossen zylindrischen Aussenoberfläche und einen zweiten Teil (106) mit einer relativ kleinen Aussenoberfläche aufweist, wobei

der zweite Oberflächenteil (126) auf dem ersten Teil (104) des Schaftes (90) angeordnet ist:

einen Nabenabschnitt (110), welcher mit einer Basis (60) verbunden ist, den zweiten Teil (106) des Schaftes umgibt und eine zylindrische Aussenoberfläche aufweist, welche den ersten Oberflächenteil (128) bildet, koaxial zur zylindrischen Aussenoberfläche (126) des ersten Teils (104) des Schaftes angeordnet ist und denselben Durchmesser wie diese aufweist, wobei

die Innenoberlfäche (124) der Schraubenfeder (118) sich im Eingriff mit der Aussenoberfläche des Nabenabschnittes (110) und dem ersten Teil (104) des Schaftes (90) befindet; und wobei

ein Ende (144) der Schraubenfeder (118) mit dem ersten Klemmelement (24) verbunden ist;

einen Kragen (132), welcher mindestens einen Teil der Schraubenfeder (118) umgibt, wobei

ein anderes Ende (140) der Schraubenfeder (118) mit dem Kragen (132) verbunden ist und die zylindrische Aussenoberfläche (126) des ersten Teils (104) des Schaftes (90) relativ zur Innenoberfläche (124) der Schraubenfeder (118) bei der Schwenkung des zweiten Klemmelementes (22) von der völlig geöffneten Stellung in irgendeine der geschlossenen Stellungen und zurück zur völlig geöffneten Stellung gleiten kann, um zu ermöglichen, dass das erste und das zweite Klemmelement (22) einen Gegenstand sicher ergreifen; und

ein Betätigungselement (46), um auf den Kragen (132) Kraft in einer Richtung auszuüben, in der die Abmessung der Innenoberfläche (124) der Schraubenfeder (118) sich vergrössert, um den Griff der Innenoberfläche der Schraubenfeder (118) auf die Aussenoberflächen (128, 126) des Nabenabschnittes (110) und des ersten Teils (104) des Schaftes zu lösen und eine Schwenkung des zweites Klemmelementes (22) von einer der geschlossenen Stellungen zurück zur völlig geöffneten Stellung zu ermöglichen.

**Revendications**

1. Convoyeur à pinces comprenant une pluralité de moyens de préhension (12) pour saisir des articles à transporter d'un premier endroit à un deuxième endroit, un guidage (16) s'étendant du premier endroit au deuxième endroit, une chaîne transporteuse (14) reliée auxdits moyens de préhension (12) et mobile le long dudit guidage, ladite chaîne transporteuse étant entourée par ledit guidage et comportant une pluraité de maillons interconnectés (18), chacun desdits maillons comprenant un corps (240) relié à l'un desdits moyens de préhension (13), des galets (244, 246) reliés audit corps (240) dudit maillon pour venir en contact avec ledit guidage (16) de manière à guider le mouvement dudit corps (240) le long dudit guidage, ledit guidage (16) comportant des parois (274, 276, 326, 328) pour entourer au moins partiellement ladite chaîne transporteuse (14) et pour définir une fente (268) à travers laquelle ledit maillon et lesdits moyens de préhension sont interconnectés, ladite fente présentant des configurations de surface (264, 266) pour empêcher la rotation axiale desdits maillons pendant le mouvement desdits maillons le long dudit guidage, caractérisé en ce que chacun desdits maillons (18) comprend une douille (284) située à une première partie d'extrémité dudit corps (240), pour recevoir une broche (286) d'un maillon adjacent, et une broche (286) située à une deuxième partie d'extrémité dudit corps (240) pour l'insertion dans une douille (284) d'un maillon adjacent, ladite douille présentant une configuration de surface pour définir une ouverture (294) à travers laquelle une broche (286) d'un maillon adjacent peut être insérée dans ladite douille (284) lorsque ledit corps (240) dudit premier maillon et le maillon adjacent sont dans une première orientation l'un par rapport à l'autre et pour empêcher une broche d'un maillon adjacent de sortir de ladite douille lorsque ledit corps dudit premier maillon et le maillon adjacent sont dans une deuxième orientation l'un par rapport à l'autre, ledit corps (240) dudit premier maillon et ledit premier moyne de préhension (12) pouvant tourner ensemble par rapport audit guidage entre la première orientation et la deuxième orientation, lesdites parois (274, 326) dudit guidage comprenant des configurations de surface qui définissent au moins partiellement une ouverture (324) pour permettre de faire tourner ensemble ledit corps (240) dudit premier maillon (18) et ledit premier moyen de préhension (12) autour de l'axe longitudinal dudit guidage à l'endroit de l'ouverture (324), de la deuxième orientation à la première orientation, et de les dissocier longitudinalement des maillons adjacents et de les déplacer latéralement à travers l'ouverture (324) tandis que les maillons adjacents sont retenus dans ledit guidage.

2. Convoyeur à pinces suivant la revendication 1, caractérisé en ce que lesdits galets comprennent un premier (244) et un deuxième (246) galets disposés de part et d'autre dudit corps (240) et pouvant tourner autour d'un axe perpendiculaire à l'axe longitudinal dudit guidage (16), lesdites parois comprenant une paroi centrale (274, 276) dans laquelle est formée la fente (268), ledit corps (240) étant orienté de sorte que l'axe de rotation desdits galets (244, 246) est perpendiculaire à ladite paroi centrale lorsque ledit corps (240) est dans la seconde orientation et ledit corps (240) étant orienté de sorte que l'axe de rotation desdits galets (244, 246) est parallèle à une paroi latérale (326, 328) lorsque ledit corps est dans la première orientation.

3. Convoyeur à pinces suivant la revendication 1, caractérisé en ce que lesdites parois (274, 276, 326, 328) dudit guidage comprennent une paroi centrale (274, 276) dans laquelle est formée la fente (268), et deux parois latérales (326, 328) raccordées aux côtés opposés de la paroi centrale, ladite ouverture (324) s'étendant à partir de la fente (268) sur au moins une partie principale d'une des parois latérales (326) pour permettre de faire tourner ensemble ledit corps (240) et ledit moyen de préhension (12) à l'endroit de l'ouverture dans ledit guidage afin de libérer ladite broche (286) et ladite douille (284) prévues sur ledit corps (240) pour les dissocier d'une douille et d'une broche prévues sur les corps des maillons adjacents.

4. Convoyeur à pinces suivant la revendication 1, caractérisé en ce que ledit corps (240), la douille (284) et la broche (286) dudit maillon sont coulés en une seule pièce.

5. Convoyeur à pinces suivant la revendication 1, caractérisé en ce que lesdits moyens de préhension (12) comprennent un premier élément de serrage (24), une première surface (128) reliée audit premier élément de serrage, un deuxième élément de serrage (22) qui peut tourner par rapport au premier élément de serrage (24) à partir d'une position d'ouverture complète jusqu'à l'une quelconque d'une pluralité de positions de fermeture afin de pouvoir saisir des articles de dimensions différentes entre lesdits éléments de serrage, une deuxième surface (126) reliée audit deuxième élément de serrage (22), et des moyens de retenue libérables (44) manoeuvrables entre un état d'enclenchement, empêchant la rotation dudit deuxième élément de serrage (22) de l'une quelconque de la pluralité de positions de fermeture à la position d'ouverture complète, et un état de libération dans lequel ledit deuxième élément de serrage (22) peut tourner de l'une quelconque de la pluralité de positions de fermeture à la position d'ouverture complète, lesdits moyens de retenue (44) comprenant un ressort hélicoïdal (118) à spire multiples (122), lesdites spires (122) dudit ressort hélicoïdal (118) présentant une configuration de surface latérale intérieure (124) pour saisir lesdites première (128) et deuxième (126) surfaces lorsque lesdits moyens de retenue (44) sont dans l'état enclenché, afin d'empêcher la rotation dudit deuxième élément de serrage (22) vers la position d'ouverture complète, lesdites surfaces latérales intérieures (126, 128) pouvant tourner l'une par rapport à l'autre lorsque lesdits moyens de retenue (44) sont dans l'état de libération pour permettre audit deuxième élément de serrage (22) de tourner vers la position d'ouverture complète.

6. Convoyeur à pieces suivant la revendication 5, caractérisé en ce que lesdites première et deuxième surfaces (126, 128) ont une configuration cylindrique et sont coaxiales à l'axe de rotation dudit deuxième élément de serrage (22) ladite surface intérieure (124) dudit ressort hélicoïdal (118) ayant une configuration cylindrique et étant disposée en relation coaxiale avec lesdites première et deuxième surfaces (126, 128).

7. Convoyeur à pinces suivant la revendication 6, caractérisé en ce qu'il comprend des moyens de manoeuvre (46) pour déplacer lesdits moyens de retenue (44) de l'état d'enclenchement à l'état de libération, lesdits moyens de manoeuvre (46) comprenant des moyens (150, 156) de poussée sur les spires (122) dudit ressort hélicoïdal (118) de manière à les faire fléchir dans une direction tendant à augmenter le diamètre de ladite configuration de surface latérale intérieure (124) dudit ressort hélicoïdal (118).

8. Convoyeur à pinces suivant la revendication 5, caractérisé en ce que les spires (122) dudit ressort hélicoïdal (118) sont enroulées autour desdites première (128) et deuxième (126) surfaces dans un sens qui déplace l'élément de serrage (22) d'une des positions de fermeture à la position d'ouverture complète.

9. Convoyeur à pinces suivant la revendication 5, caractérisé en ce qu'au moins l'une desdites première (128) et deuxième (126) surfaces applique une force de frottement à ladite configuration de surface latérale intérieure (124) dudit ressort hélicoïdal (118) dans une direction tendant à augmenter la dimension des spires (122) dudit ressort hélicoïdal (118) lors de la rotation dudit deuxième élément de serrage (22) de la position d'ouverture complète vers une des positions de fermeture.

10. Convoyeur à pinces suivant la revendication 5, caractérisé en ce qu'il comprend un collier (132) entourant ledit ressort hélicoïdal (118), une première extrémité (140) dudit ressort hélicoïdal (118) étant reliée audit collier (132) et une deuxième extrémité (144) dudit ressort hélicoïdal (118) étant reliée audit premier élément de serrage (24), et des moyens de manoeuvre (46) pour déplacer lesdits moyens de retenue (44) de l'état d'enclenchement à l'état de libération, lesdits moyens de manoeuvre (46) comportant des moyens (150, 156) pour faire tourner ledit collier (132) par rapport audit premier élément de serrage (22).

11. Convoyeur à pinces suivant la revendication 5, caractérisé en ce qu'il comprend un arbre (90) relié audit deuxième élément de serrage (22) pour tourner avec lui par rapport audit premier élément de serrage (24), ledit arbre (90) comportant une première partie (104) à surface latérale extérieure cylindrique relativement grande et une deuxième partie (106) à surface latérale extérieure relativement petite, ladite deuxième surface (126) étant située sur ladite première partie (104) dudit arbre, un moyeu (110) relié à ladite base (60) et entourant la deuxième partie (106) dudit arbre, ledit moyeu (110) étant une surface latérale extérieure cylindrique qui constitue ladite première surface (128) et est coaxiale avec la surface et de même diamètre que la surface latérale extérieure cylindrique (126) de ladite première partie (104) dudit arbre, ladite surface latérale intérieure (124) dudit ressort hélicoïdal (118) étant disposée en contact avec les surfaces latérales extérieures dudit moyeu (110) et de la première partie (104) dudit arbre, une partie d'extrémité (144) dudit ressort hélicoïdal (118) étant reliée audit premier élément de serrage (24), un collier (132) entourant au moins une partie dudit ressort hélicoïdal, une autre partie d'extrémité (140) dudit ressort hélicoïdal (118) étant reliée audit collier (132), ladite surface latérale extérieure cylindrique (126) de ladite première partie (104) dudit arbre (90) pouvant coulisser par rapprot à la surface latérale intérieure (124) dudit ressort hélicoïdal (128) lors de la rotation dudit deuxième élément de serrage (22) de la position d'ouverture complète à l'une quelconque des positions de fermeture et retour à la position d'ouverture complète pour permettre auxdits premier et deuxième éléments de serrage (24, 22) de maintenir une prise solide sur un article, et des moyens de manoeuvre (46) pour appliquer une force sur ledit collier (132) dans une direction d'augmentation de la dimension de la surface latérale intérieure (124) dudit ressort hélicoïdal (118) pour relâcher la prise de la surface latérale intérieure (124) dudit ressort hélicoïdal (118) sur les surfaces latérales extérieures (128, 126) dudit moyeu (110) et la première partie (104) dudit arbre afin de permettre audit deuxième élément de serrage (22) de revenir à la position d'ouverture complète par rotation à partir d'une des positions de fermeture.

FIG.1

FIG.2

EP 0 223 999 B1

FIG. 3

FIG.4

FIG.5

FIG.6

FIG.7

150
46
84
152
60
136
52
FIG.8
160
154    156
82

FIG.9

FIG. 10

FIG. II

FIG. 13

FIG. 14

FIG. 12

FIG.15

FIG. 16

FIG. 17

EP 0 223 999 B1

FIG.18

FIG. 19